# EUROPEAN PATENT SPECIFICATION

(11) **EP 3 587 358 B1**
(45) Date of publication and mention of the grant of the patent: **30.03.2022**
(21) Application number: 19182546.2
(22) Date of filing: 26.06.2019
(51) Int. Cl.: C02F 1/28, B01D 39/18, B01J 20/24, C02F 101/22

(54) **METHOD FOR OBTAINING A FILTER**
VERFAHREN ZUR HERSTELLUNG EINES FILTERS
PROCÉDÉ D'OBTENTION D'UN FILTRE

(30) Priority: 26.06.2018 IT 201800006693
(43) Date of publication of application: 01.01.2020
(73) Proprietor: Consorzio Interuniversitario Nazionale per la Scienza e Tecnologia dei Materiali, 50121 Firenze (IT); Università degli Studi di Brescia, 25121 Brescia (IT)
(72) Inventor: ALESSANDRI, Ivano, 25046 Cazzago S. Martino (BS) (IT); VASSALINI, Irene, 25070 Preseglie (BS) (IT)
(74) Representative: Zambardino, Umberto

(56) References cited:
- WO-A1-2006/066586
- US-A- 2 759 787
- US-A- 4 260 740
- US-A1- 2006 041 116
- DAVID WILLIAM O'CONNELL ET AL: "Heavy metal adsorbents prepared from the modification of cellulose: A review", BIORESOURCE TECHNOLOGY, vol. 99, no. 15, 1 October 2008 (2008-10-01), pages 6709-6724, XP055340546, AMSTERDAM, NL ISSN: 0960-8524, DOI: 10.1016/j.biortech.2008.01.036

## Description

### Field of application

In its more general aspect, the present disclosure relates to a filter comprising a porous material for removing heavy metals which are harmful to human health from aqueous solutions, in particular it relates to a cellulose filter that is functionalized with organic acids.

More specifically, said filter comprising a porous material is a filter that is functionalized with a method according to the present invention, which provides for the use of organic acids obtained from recycled material, preferably extracted from waste plants that are suitable for food consumption, from expired drugs and/or from a waste additive used in food or pharmaceutical field.

The present invention also relates to a method for the functionalization of pre-existing filters comprising a porous material through the use of organic acids coming from said recycled materials.

Finally, the present disclosure relates to a use of said filter for removing heavy metals from aqueous solutions, in particular a use for the purification of mains water.

### Prior art

Improving the quality of drinking water is a goal of increasing relevance on a global, European and national level.

Unfortunately, often due to obsolete distribution systems, even inside private structures such as buildings in historic centers or recently constructed apartment buildings, the quality of water that reaches the consumer's faucet is often not optimal from a qualitative point of view, in particular it often has a concentration of metals that does not fall within the limits established by law.

A parameter of particular interest for human and animal health is the concentration of harmful heavy metals: a metallic species that is of particular concern is hexavalent chromium, Cr (VI), that is chromium in oxidation state 6.

In fact, hexavalent chromium is a particularly toxic species, classified as "Carcinogenic to humans", group 1, by the International Agency for Research on Cancer, namely as a species that is certainly carcinogenic to human beings.

The decree of November 14, 2016 of the Italian Ministry of Health, whose entry into force is scheduled on December 31, 2018, establishes a maximum limit of 10 µg/L of Cr (VI) for water intended for human consumption.

The presence of Cr (VI) in the network water may have natural (ophiolitic rocks) and/or anthropic (industrial discharges, for instance chromium plating plants) origin.

Even in the case of aqueduct water with Cr (VI) values lower than the limits set by the aforementioned statutory threshold, the Cr (VI) concentration in the water at the domestic user outlet may be increased due to the release by the distribution system (pipes, taps, fittings, valves).

At the aqueduct level, the Cr (VI) reduction is carried out with different methods, including the chemical reduction to Cr (III) hydroxide, insoluble, which can be removed by filtration; the reduction is carried out using ferrous sulfate. Other methods involve the use of ion exchange resins and/or reverse osmosis.

In the domestic environment the techniques for removing Cr (VI) are mainly based on the use of reverse osmosis or filters containing cationic resins; moreover, there are filter cartridges that contain molecules of activated carbon, copper and zinc, known as KFD (Kinetic Degradation Fluxion): in the latter case hexavalent chromium, as well as other heavy metals, is removed through the aid of redox reactions.

However, at least as for the domestic environment, the techniques described above have some drawbacks.

The chemical reduction to Cr (III) hydroxide using ferrous sulfate, however effective, cannot be applied in the domestic environment, since, precisely causing the formation of insoluble precipitates, would require complex procedures for removing these precipitates and, consequently, greater attention to the overall maintenance of the water system.

Reverse osmosis consists of a very efficient technique for removing solutes dissolved in dilute aqueous solutions. On the other hand, it is known that, precisely due to the high sensitivity of the membranes used for this type of filtration, a pre-filtration treatment is necessary to avoid membrane clogging.

Furthermore, due to the lack of selectivity of this technology, the water thus filtered is often excessively impoverished of the solutes originally dissolved therein (therefore, also of elements useful in appropriate quantities for human organism, such as magnesium and calcium) and, thus, must be re-mineralized.

The use of cationic resins, on the other hand, is effective in softening the network water with removal of calcium ions and Fe(II) ions, but it is also often associated with a constant maintenance of the softening equipment: the softening column - after prolonged use - is impoverished of sodium and loses its filtering capacity, therefore it must be periodically regenerated.

The regeneration and cleaning of the softening columns is often carried out using sulfuric acid, which on the one hand, by reacting with calcium ions, forms calcium sulphate, on the other hand, by oxidizing the iron (II) ions to iron (III) ions, causes the formation of iron (III) hydroxide.

Both calcium sulphate and ferrous hydroxide can precipitate and accumulate in the filtering equipment, causing the exchange resins to clog and compromising their efficiency.

Removal of heavy metals by Kinetic Degradation Fluxion is also not exempt from drawbacks. In fact, although it is relatively efficient in removing heavy metals from mains water for domestic use, this technique also requires constant periodic maintenance of the filters to remove insoluble contaminants.

In any case, whatever the filtration technique used among those known above described, the cleaning and/or regeneration of the filter or of the exchange resin requires the use of a considerable quantity of water, which - besides constituting a waste in itself - may cause the release of the sequestered and/or adsorbed metals by the filtering material into the discharge or, alternatively, may determine the production of a conspicuous volume of contaminated aqueous wastes that must be subsequently disposed of.

In particular, the release of heavy metals which are toxic for human and/or animal health into the discharge is not at all desirable, since it would cause them to be reintroduced into the natural water cycle, which would lead to the recurrence of the problem at issue for utilities and ecosystems located downstream of the filtering system at issue.

US 2006/041116 A1 provides for a process for the production of dual-functional ion exchange resins from lignocellulosic agricultural material involving anionization of the lignocellulosic agricultural material with citric acid and then cationization of the lignocellulosic agricultural material with dimethyloldihydroxyethylene urea (DMDHEU) and choline chloride, or cationization of the same material with DMDHEU and choline chloride and then anionization of the lignocellulosic agricultural material with citric acid. The reaction with DMDHEU is carried out at a temperature between 100-200°C.

US 4260740 A provides for a process for preparing a carboxylated cellulose ion exchange material which comprises heating a mixture of cellulose and citric, isocitric or aconitic acid at a temperature of from about 100°C to 160°C. while removing water, and then treating the product with aqueous alkali at a pH of 8 to 11 to hydrolyze cross-linked acid residues.

WO2006066586 provides for a modified sorptive lignocellulosic fiber material with hydroxyl groups on the lignocellulosic fibers doubly modified by esterification with a combination of monocarboxylic and dicarboxylic acid ester groups. The sorptive fiber material is used for the removal of oils and other contaminants including heavy metals from a fluid such as contaminated water.

US 2759787 discloses a process for the functionalization of cellulose pulp with citric acid. An esterification reaction is carried out by heating at dry conditions.

However, the aforementioned processes know form the prior art need energy-intensive functionalization steps in order to carry out an esterification of the substrate.

In addition, the functionalization processes known in the art make use of toxic and/or polluting solvents and reagents, such as pyridine.

The need is therefore felt to provide a removal/adsorption technique of heavy metals which are harmful to human health from aqueous solutions, as well as to provide a material having filtering properties that can boast of similar advantages, overcoming the drawbacks above described with reference to the prior art.

The main object of the present invention is therefore to provide a filter, suitable for use as an adsorbent substrate for removing heavy metals which are harmful to human health from aqueous solutions, and - at the same time - a method for obtaining such filter, thus method being cheap and green from the environmental point of view.

### Summary of the invention

This technical problem is solved by a process for obtaining a filter comprising a porous material that is functionalized with organic acids which are obtained from recycled materials, wherein said process comprises the following steps:
- providing a pre-existing filter comprising a porous material, said porous material being cellulose;
- providing an aqueous solution comprising a mixture of organic acids and/or salts thereof, wherein said aqueous solution has a total concentration of said organic acid and/or a salt thereof comprised between 0.01 mol/L and 1.5 mol/L;
- soaking said pre-existing filter in said aqueous solution until a filter comprising a porous material that is functionalized with said organic acid or with the organic acids of said mixture is obtained;
- removing said filter comprising the porous material thus functionalized,
- drying said filter at room temperature,
wherein in the step of providing an aqueous solution, the aqueous solution is an aqueous mixture of citric acid and ascorbic acid.

As it will be illustrated hereinafter in connection with the detailed description and examples, the process according to the present invention allows obtaining a filter comprising a porous material that is functionalized with organic acids obtained from recycled materials, which proved to be particularly effective in removing heavy metals from aqueous solutions, in particular in removing hexavalent chromium from aqueous solutions, such as mains water.

The process according to the present invention is simple to execute, since its single passages both contemplate the use of easily available materials and are performed under particularly bland process conditions.

In fact, the process at issue provides for the functionalization of the porous material comprised in the above cited pre-existing filter through simple soaking in an aqueous solution comprising organic acids at a prefixed concentration.

This soaking passage must not be conducted at high temperatures and/or pressures and does not require the use of organic solvents, additional reagents or catalysts.

Preferably, the aforementioned soaking step is carried out at room temperature.

In particular, it must be said that this soaking step is effective in the functionalization of said porous material by simple soaking in a solution in which organic acids and/or salts thereof are dissolved at a relatively low prefixed concentration.

Preferably, said existing filter may be a filter septum or a film made of porous material, which are suitable for the filtration of aqueous solutions.

For instance, said existing filter may be any commercial filter comprising cellulose, which is suitable for the filtration of aqueous solutions.

According to the present invention, the expression "porous material" indicates a material with an average pore diameter less than or equal to 10 µm, preferably with an average pore diameter equal to about 2.5 µm.

Additional types of filter suitable for use as a pre-existing filter in a process not according to the present invention are polycarbonate-based filters or bird eggshell membrane-based filters.

The term "bird eggshell membranes" indicates the cuticle, the external testaceous membrane and/or the internal testaceous membrane.

Moreover, the process at issue allows the valorization of waste materials in an extremely advantageous manner, for instance a waste plant intended for food consumption, an expired drug and/or a waste additive used in the food or pharmaceutical field, using the organic acids and/or salts thereof contained therein for the functionalization of the above cited porous material comprised in said pre-existing filter.

According to the present invention, in the step of providing a pre-existing filter, this filter is made of a porous material comprising polarized functional groups, such as functional groups which are able to form a bond of stable intermolecular attraction with the above organic acids during the subsequent soaking step, for instance a bond between permanent di-pole (porous material of the filter) and permanent di-pole (organic acids of the solution).

Indeed, the present invention provides for a process for the functionalization of such pre-existing filter without the need to establish a covalent bond between the porous material and the organic acids; conversely, it provides for a filter comprising a porous material which is functionalized with organic acids, in which an intermolecular bond between the polarized functional groups of the filter and the organic acid is established.

Consistently, most preferably, this filter is made of a material comprising functional groups capable of forming a hydrogen bond with the above organic acids in the subsequent soaking step; more preferably, this filter may be made of cellulose.

Still more preferably, this filter may be made of nano-crystalline cellulose, in particular formed by the so-called "cellulose nanowhiskers", namely cellulose cylindrical sticks having diameter comprised between about 5-10 nm and length comprised between about 20-1000 nm.

The porosity of filters made by using nano-cellulose may be suitably modified in order to maximize the selective adsorption of contaminants such as heavy metals, pesticides and micropollutants.

According to the process of the present invention, in the above passage of providing an aqueous solution comprising a mixture of organic acids this acid is a mixture of ascorbic acid and citric acid.

More preferably, this aqueous solution has a total concentration of acid (namely the total concentration obtained from the sum of citric acid moles with those of ascorbic acid) comprised between 0.025 mol/l and 1 mol/L.

In a more preferred manner, this aqueous solution has a total concentration of acid (namely the total concentration obtained from the sum of citric acid moles with those of ascorbic acid) equal to 0.1 mol/L. Preferably, in said aqueous solution the molar ratio between ascorbic acid and citric acid is comprised between 1:4 and 4:1, preferably it is comprised between 1:3 and 3:1.

In a mostly preferred manner, as it will be seen in more detail hereinafter in connection with the detailed description, in said aqueous solution the total concentration of the above organic acids (ascorbic acid and citric acid) is equal to 0.1 mol/L and the molar ratio between ascorbic acid and citric acid is comprised between 1:4 e 4:1, preferably it is comprised between 1:3 and 3:1.

As it will be illustrated hereinafter in connection with the detailed description and examples, when the aforementioned soaking passage is performed by soaking a pre-existing filter comprising a porous material in an aqueous solution comprising a mixture of citric acid and ascorbic acid, obtained from recycled materials, the process according to the present invention allows obtaining a filter comprising a porous material that is functionalized with citric acid and ascorbic acid, which proved to be particularly effective in removing heavy metals from aqueous solutions, in particular Cr⁶⁺, Cr³⁺, Ca²⁺, Mg²⁺, Fe²⁺, Fe³⁺, Mn²⁺, Co²⁺, Cd2+, Ni²⁺, Cu²⁺, Zn²⁺, as well as radioactive elements such as uranium, plutonium, neptunium, americium and, more generally, cations able to form oxides of the MO₂²⁺ type.

In an extremely advantageous manner, the process according to the present invention allows obtaining a filter, in particular a filter as obtained in connection with the preceding paragraph, which is particularly effective in removing hexavalent chromium from aqueous solutions.

Therefore, as it is clearly shown with reference to the detailed description, the present invention advantageously provides for a process for the functionalization of such pre-existing filter through a soaking step during which a pre-existing filter is soaked in a solution comprising a mixture of citric acid and an ascorbic acid.

In particular, as explained in the detailed description, the functionalized filter thus obtained comprises ascorbic acid which would exert a reducing function towards hexavalent chromium, which is normally present in mains water as oxyanion, whereas citric acid would sequester the resulting so-reduced chromium ions.

Preferably, according to the process of the present invention, said soaking step is performed for a time comprised between 10 minutes and 2 hours, preferably for a time comprised between 15 minutes and 1 hour, more preferably for 45 minutes.

Preferably, said drying step is carried out under vacuum for a time comprised between 1 hour and 20 hours, more preferably between 10 hours and 18 hours, even more preferably for about 15 hours.

In an equally preferred manner, according to the process at issue, the aforementioned organic acid and/or a salt thereof or the organic acids in mixture and/or salts thereof comprised in the aforementioned aqueous solution are obtained from a waste material, more preferably from a waste plant intended for human consumption, from an expired drug and/or from a waste additive used in the food or pharmaceutical industry.

For instance, the above step of providing an aqueous solution comprising an organic acid and/or a salt thereof or a mixture of organic acids and/or salts thereof may be carried out by using an extract obtained from fruit and vegetable wastes (citrus fruits, broccoli, peppers, kiwi, to mention some vegetable products that are potentially rich in organic acids useful according to the present invention) or by using expired drugs and/or expired food supplements (for instance, comprising ascorbic acid).

It is provided also a filter comprising a porous material that is functionalized with recovery organic acids, which is obtainable through any of the embodiments above described of the process according to the present invention.

The filter thus provided by the present invention, in addition to boasting of all of the advantages with reference to the process for obtaining the same, has benefits in terms of economy, environmental safety, personal safety of the end user and operational efficiency, as it will be hereinafter illustrated in connection with the detailed description and examples.

In particular, the filter provided by the present invention is particularly effective in removing heavy metals and, specifically, hexavalent chromium from aqueous solutions.

In fact, the organic acid groups of the filter according to the present invention comprising a porous material that is functionalized with organic acids form metal complexes with the metal ions dissolved in the aqueous solution to be filtered.

Moreover, the filter according to the present invention is particularly effective in removing hexavalent chromium from aqueous solutions, despite the presence of other possible ions dissolved therein, which are different from and competing with ions in which hexavalent chromium is present in the aqueous solution.

Moreover, the filter at issue, once these dissolved metals have been sequestered in the previously filtered aqueous solution, proved to be particularly effective in retaining these metals when exposed to a further passage of aqueous solutions, for instance mains water (contaminated or not contaminated by heavy metals) therethrough.

Finally, there is to say that, precisely by virtue of its cheapness and simplicity of disposal (being made of materials other than plastic polymers or resins anchored to supports of difficult disposal such as plastic and/or metal composite devices), when its capacity to remove heavy metals from aqueous solutions is exhausted, the filter can be easily removed from the filtration device in which it is installed and, therefore, sent for disposal without the disadvantages of the exchange resins or other types of filters, previously described in connection with the prior art.

Definitely, it is disclosed the use of the filter according to the present invention for removing of heavy metals from aqueous solutions, preferably for removing hexavalent chromium from aqueous solutions.

Moreover, it is disclosed the use of the filter according to the present invention for removing heavy metals from mains water, preferably for removing hexavalent chromium from mains water.

The features and advantages of the present invention, both in connection with the above process and the filter obtained therewith, will become clearer from some of the embodiments thereof which are hereinafter exposed by way of non-limiting example with reference to the enclosed figures.

### Figures

Figure 1 relates to a histogram showing the hexavalent chromium concentration in an aqueous solution resulting from hexavalent chromium removal tests from contaminated water, carried out with filters comprising cellulose that is functionalized with different types of broccoli extracts.
Figure 2 relates to a histogram showing the hexavalent chromium concentration in an aqueous solution resulting from hexavalent chromium removal tests from contaminated water, carried out with filters comprising cellulose that is functionalized with citric acid, acetic acid or mixtures thereof.
Figure 3 relates to a histogram showing the hexavalent chromium concentration in an aqueous solution resulting from comparative hexavalent chromium removal tests from contaminated water between filters that are functionalized by soaking in an acid solution having a determined molar ratio between citric acid and ascorbic acid, and filters obtained by soaking the single acids in acid solutions.
Figure 4 relates to a histogram showing the hexavalent chromium concentration in an aqueous solution resulting from hexavalent chromium removal tests from contaminated water, as a function of the soaking time of filters comprising cellulose that is functionalized in a solution of 0.1 M ascorbic acid.
Figure 5 relates to a histogram showing the hexavalent chromium concentration in an aqueous solution resulting from hexavalent chromium removal tests from contaminated water with filters comprising cellulose that is functionalized with malonic acid, citric acid, oxalic acid and ascorbic acid.

### Detailed description

Some examples are hereinafter reported, which are the result of extensive research carried out by the inventors to develop a new process for obtaining a filter comprising cellulose that is functionalized with organic acids obtained from recycled materials (plant wastes intended for human consumption).

The following examples relate to operating tests of the filters thus obtained, in particular heavy metals removal tests (hexavalent chromium) from aqueous solutions in which these metals have been previously dissolved.

Moreover, a release test is reported to verify the effective retention of a filter according to the invention, which has been previously subjected to a removal test and, subsequently, soaked for several hours in uncontaminated distilled water.

### Example 1: extraction of organic acids from food wastes (citrus fruits)

About 300 g of waste lemons were selected and placed into two different extraction chambers of a system of the type described in the Italian patent application for invention n. 101998900689710.

The base system of the apparatus consists of two extraction chambers (two cylinders equipped with a mobile piston), on the bottom of which two porous walls are placed allowing the liquid and the substances dissolved therein to pass through, while blocking the coarse particles of solid material. The two extraction chambers are put into communication through a duct on which a solenoid valve is inserted, which remains closed for the entire extraction time and is only used for solvent collection.

The system and process herein described are based on a suction effect generated by the compression of the extracting solvent (distilled water) on a solid sample (vegetable matrix), in which the compression is determined by applying a pressure comprised between 6-8 bar, for a determined time, followed by a sudden decompression up to atmospheric pressure.

The rapid leakage of the extracting liquid absorbed by the solid matrix towards the outside thereof, due to the pressure gradient, mechanically transports the substances of interest (the organic acids of the vegetable matrix), solubilized in the extracting liquid, into the supernatant phase.

In each of the two extraction chambers approximately 500 ml of demineralized water were then added and, subsequently, a 6 bar pressure was applied by the action of a pair of pistons, leading to the so-called "static phase" of the extraction process.

The static phase is carried out for a time equal to 2 minutes.

A sudden release of pressure followed, so as to allow the extractable organic acids to be transferred to the supernatant ("dynamic phase").

The aforementioned dynamic phase-static phase cycle was repeated for further 15 times.

The alternation of a static phase with a dynamic one constitutes an extraction cycle: by reiterating multiple extraction cycles, the solid matrix was completely exhausted. At the end of the extraction, the supernatant in which the organic acids of interest were solubilized was expelled through a solenoid valve and collected in a proper container.

At the end of the extraction procedure about one liter of extract is obtained, which contains about 231 mg of ascorbic acid and about 8.6 g of citric acid. The solution was dried in a rotary evaporator (for instance, Buchi R-300 rotavapor).

The dried product can be re-suspended with a suitable volume of distilled water, depending on the desired concentration of the soaking solution for the pre-existing filter (see Example 3 and the following ones).

The technique used allows providing an aqueous solution comprising a mixture of organic acids, obtained from recycled materials, suitable for use in the process according to the present invention.

Moreover, the above described technique allows a rapid exhaustion of solid matrices (food wastes like vegetable matrices) containing organic acids of interest, at low operating temperatures (ambient or sub-ambient, so as not to cause degradation of the organic acids of interest), without the use of organic solvents or substances which are potentially harmful to humans or to the environment, as well as it ensures the reproducibility of the extraction since there is the real possibility of standardizing the extracts for the content of compounds of interest.

### Example 2: extraction of organic acids from food wastes (vegetables without peel)

In this case the extraction of organic acids of interest from vegetables with a high content of ascorbic acid was developed.

500 g of whole broccoli were centrifuged with a kitchen centrifuge (a wholly conventional commercially available centrifuge with 400 W power) thus obtaining 100 mL of solution.

The solution thus obtained contained 450 mg of ascorbic acid (0.025 M) and 270 mg of citric acid (0.014 M). As it will be seen from the following examples, this solution can be directly used for the functionalization procedure of the porous support (see Example 3).

### Example 3: process for obtaining a filter comprising a porous material that is functionalized with organic acids with raw extracts obtained from fruit and vegetable wastes

A cellulose filter of the Whatman n. 5 model type, 200 µm thick (with an average pore diameter of 2.5 µm), is provided.

Subsequently, said filter is soaked for 45 minutes in 100 mL of broccoli extract solution, obtained in Example 2.

Subsequently the functionalized filter, thus obtained, is dried for 15 hours at room temperature in a borosilicate glass dryer (e.g. Colaver). The filter thus obtained is hereinafter called Filter 1.

The described procedure for obtaining Filter 1 is repeated by using a non-functionalized filter and a further portion of the solution obtained in Example 2.

Subsequently the functionalized filter is dried for 15 hours at room temperature in a borosilicate glass dryer.

The filter thus obtained is soaked in a new portion (100 ml) of the broccoli extract solution used during the previous soaking and drying cycle, then it is dried analogously to the previous cycle (total number of soaking cycles and subsequent drying equal to two). The filter thus obtained is hereinafter called Filter 2.

Finally, the described procedure for obtaining Filter 2 is repeated by using a non-functionalized filter and two further new portions of the solution obtained in Example 2.

The filter thus obtained is soaked in a new portion (100 ml) of the broccoli extract solution used during the previous soaking and drying cycle, then it is dried analogously to the previous cycle (total number of soaking cycles and subsequent drying equal to three). The filter thus obtained is hereinafter called Filter 3.

### Example 4: hexavalent chromium removal tests from contaminated water with filters obtained by soaking in raw extracts from fruit and vegetable wastes

For each of the filters obtained in Example 2 (Filters 1-3), Cr (VI) abatement tests were performed from aqueous solutions obtained by adding a known quantity of K₂Cr₂O₇ (able to release hexavalent chromium as chromate ion) in bottled law mineral water (for instance, bottled water of the "Norda", "Levissima" or "Consilia" brand) without hexavalent chromium (with a Cr (VI) concentration lower than the detection limits).

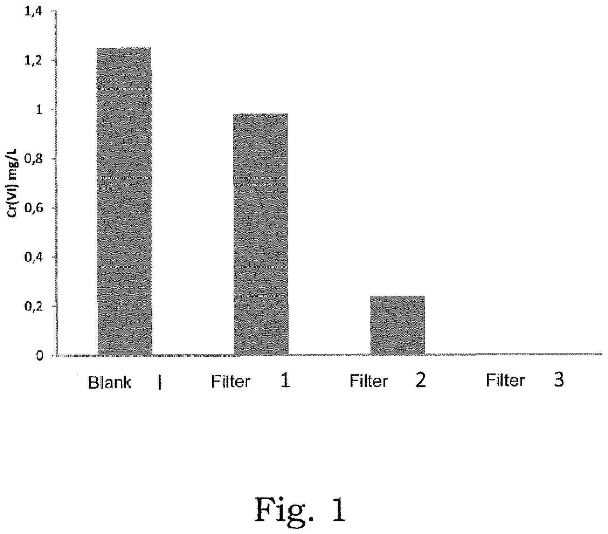

Thus, first of all an aqueous solution with a Cr (VI) concentration equal to 1.25 mg/L was prepared (indicated as "Blank I" in Figure 1).

Then, each functionalized filter (Filter 1, Filter 2 and Filter 3) was singularly soaked in a beaker containing 50 ml of the hexavalent chromium aqueous solution thus prepared for a time equal to 1 minute.

Afterwards, the aqueous solution of each beaker was subsequently analyzed through colorimetric test based on the formation of complex between hexavalent chromium and diphenyl carbazide (7196A Environmental Protection Agency method), in order to determine the concentration of hexavalent chromium further to the removal test performed in each beaker.

The results of each test are shown in Figure 1.

As clear, already the use of Filter 1 allows a modest abatement of hexavalent chromium in the previously prepared aqueous solution.

Differently, Filter 2 allows an even more marked abatement of hexavalent chromium in the same type of aqueous solution, whereas Filter 3 allows, in an extremely advantageous manner, a complete abatement of hexavalent chromium dissolved in the solution in which it was soaked.

### Example 5: process for obtaining a filter comprising a porous material that is functionalized with organic acids

Hereinafter a process execution form according to the present invention is reported.

First of all, a cellulose commercial filter (Whatman n. 5 type), 200 µm thick (with an average pore diameter of 2.5 µm), is provided.

Thus, a 0.1 M ascorbic acid aqueous solution is prepared using a commercially available ascorbic acid, supplied by Sigma-Aldrich.

Afterwards, the cellulose filter is soaked in the previously prepared 0.1 M ascorbic acid aqueous solution; the filter is left soaked for 45 minutes.

Subsequently, the cellulose filter thus functionalized is dried for 15 hours at room temperature in a borosilicate glass dryer (e.g. Colaver). The filter thus obtained is hereinafter called Filter 4.

The above described experimental procedure is repeated by soaking new and non-functionalized portions of the same type of filter in the following aqueous solutions, thus respectively obtaining cellulose filters with a characteristic functionalization:
- 0.1 M aqueous solution with an ascorbic acid : citric acid molar ratio equal to 3 : 1 (0.075 M ascorbic acid and 0.025 M citric acid, Filter 5);
- 0.1 M aqueous solution with an ascorbic acid : citric acid molar ratio equal to 1 : 1 (0.05 M ascorbic acid and 0.05 M citric acid, Filter 6);
- 0.1 M aqueous solution with an ascorbic acid : citric acid molar ratio equal to 1 : 3 (0.025 M ascorbic acid and 0.075 M citric acid, Filter 7); and,
- 0.1 M citric acid aqueous solution (Filter 8).

### Example 6: hexavalent chromium removal tests from contaminated water

For each of the filters obtained in Example 5 (Filters 4-8), Cr (VI) abatement tests were performed from aqueous solutions obtained by adding a known quantity of K₂Cr₂O₇ in bottled law mineral water (for instance, bottled water of the "Norda", "Levissima" or "Consilia" brand) without hexavalent chromium (with a Cr (VI) concentration lower than the detection limits).

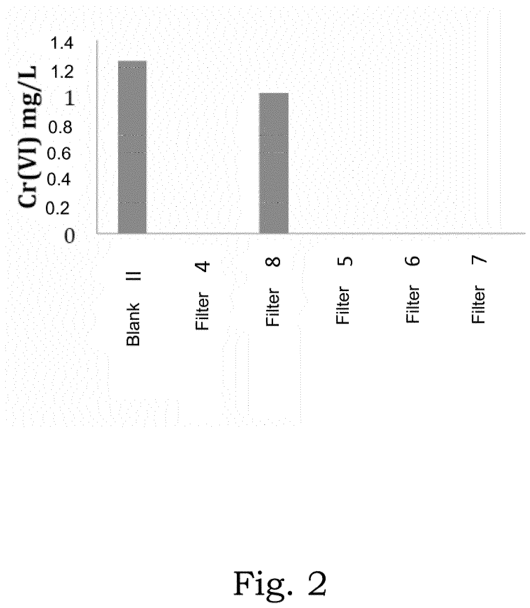

Thus, first of all an aqueous solution with a Cr (VI) concentration equal to 1.25 mg/L was prepared (indicated as "Blank II" in Figure 2).

Then, each functionalized filter (Filter 1, Filter 2 and Filter 3) was singularly soaked in a beaker containing 50 ml of the aqueous solution of hexavalent chromium thus prepared for a time equal to 1 minute.

Afterwards, the aqueous solution of each beaker was subsequently analyzed through colorimetric test based on the formation of complex between hexavalent chromium and diphenyl carbazide (7196A Environmental Protection Agency method), in order to determine the hexavalent chromium concentration further to the removal test performed in each beaker.

The results of each test are shown in Figure 2.

As clear from Figure 2, the filter functionalized with ascorbic acid (Filter 4) and the filters that are functionalized with a mixture of ascorbic acid and citric acid (Filters 5-7) allow a complete removal of hexavalent chromium from the contaminated aqueous solution in which they were soaked.

### Example 7: release test

The stability of the filter obtained through the process according to the present invention was verified by soaking a filter (Filter 4b, obtained like Filter 4 was obtained according to Example 5) in a volume of distilled water of 50 ml for 72 hours at room temperature and atmospheric pressure.

Afterwards, the resulting aqueous solution was subsequently taken and analyzed through UV-Vis spectroscopy, in order to determine the ascorbic acid concentration therein.

The ascorbic acid release found is completely negligible (acid concentration in the resulting solution lower than 1•10⁻⁴ M): the stability of the coordination bonds between the hydroxyls of cellulose and ascorbic acid is thus proved.

### Example 8: comparative tests for hexavalent chromium removal from contaminated water between filters functionalized by soaking in an acid solution with a determined molar ratio between citric acid and ascorbic acid, and filters obtained by soaking the single acids in acid solutions.

The experimental procedure described above in Example 5 is repeated by soaking new and non-functionalized portions of the same type of filter in the following aqueous solutions, respectively obtaining cellulose filters with a characteristic functionalization:
- 0.025 M ascorbic acid aqueous solution (Filter 9);
- 0.075 M aqueous solution of equal citric acid (Filter 10);
- 0.1 M aqueous solution with an ascorbic acid : citric acid molar ratio equal to 1 : 3 (0.025 M ascorbic acid and 0.075 M citric acid, Filter 11).

Similarly to what was done in example 6, for each of the filters thus obtained (Filters 9-11), Cr (VI) abatement tests were performed from aqueous solutions obtained by adding a known quantity of K₂Cr₂O₇ in bottled law mineral water (for instance, bottled water of the "Norda", "Levissima" or "Consilia" brand) without hexavalent chromium (with a Cr (VI) concentration lower than the detection limits).

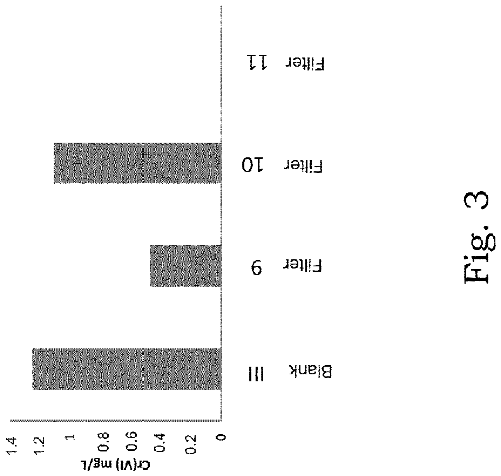

Thus, first of all an aqueous solution with a Cr (VI) concentration equal to 1.25 mg/L was prepared (indicated as "Blank III" in Figure 3).

Then, each functionalized filter was singularly soaked in a beaker containing 50 ml of the hexavalent chromium aqueous solution thus prepared for a time equal to 1 minute.

Afterwards, the aqueous solution of each beaker was subsequently analyzed through colorimetric test based on the formation of complex between hexavalent chromium and diphenyl carbazide (7196A Environmental Protection Agency method), in order to determine the hexavalent chromium concentration further to the removal test performed in each beaker.

The results of each test are shown in Figure 3.

Filter 9 allows a partial but still moderate chromium (IV) abatement, determining a decrease in the contaminant concentration from 1.25 mg/L to about 0.5 mg/L, therefore a decrease in concentration equal to about 0.75 mg/L.

For filter 10 there is a more modest decrease in concentration, which is lowered from 1.25 mg/L to about 1.1 mg/L, thus a decrease in concentration equal to 0.15 mg/L.

Surprisingly, however, filter 11 allows a complete chromium (VI) abatement, determining a decrease in the concentration of the polluting species higher than the sum of the decreases recorded for the individual ascorbic acid and citric acid solutions (0.75 mg/L + 0.15 mg/L = 0.90 mg/L < 1.25 mg/L).

Thus, when ascorbic acid and citric acid are used in combination for the preparation of a solution for the functionalization of a filter comprising porous material, the process according to the present invention allows obtaining filters which are particularly effective in the abatement of hexavalent chromium dissolved in aqueous solutions, however showing an unexpected synergistic effect given by the combination of one acid with another.

Specifically, it is believed that in the case of chromium (VI) a first reduction from Cr (VI) and Cr (III) performed by ascorbic acid and a subsequent complexation of Cr (III) by citric acid is recorded. Thus, when present in combination, ascorbic acid would exert a reducing function towards hexavalent chromium, whereas citric acid would sequester the resulting Cr (III).

### Example 9: hexavalent chromium removal tests from contaminated water from aqueous solutions as a function of time

The experimental procedure described in Example 5 is repeated by soaking four new and non-functionalized portions of the same type of filter in four beakers containing a 0.1 M ascorbic acid aqueous solution.

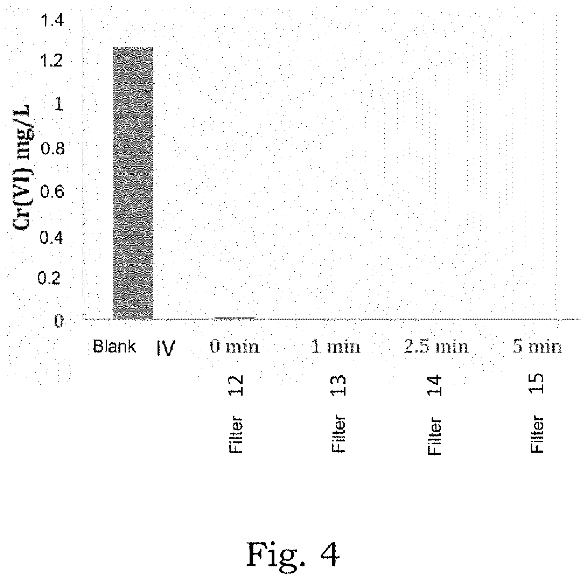

Similarly to what was done in example 6, each of the filters thus functionalized (Filter 12, Filter 13, Filter 14, Filter 15), was singularly soaked in a beaker containing 50 ml of an aqueous solutions (prepared from bottled low mineral water of the "Norda", "Levissima" or "Consilia" brand) with a hexavalent chromium concentration equal to 1.25 mg/L (indicated as "Blank IV" in Figure 4).

Each filter was soaked in the aqueous solution contaminated with hexavalent chromium for a prefixed time, as follows: Filter 12, 5 seconds; Filter 13, 1 minute; Filter 14, 2.5 minutes; and, Filter 15, 5 minutes.

The results of each test are shown in Figure 4.

Surprisingly, with particular attention towards the test relating to Filter 12, the filter obtained through the process according to the present invention allows effectively removing hexavalent chromium from an aqueous solution in a significantly reduced time, i.e. equal to or less than 5 seconds.

After a time equal to 1 minute (Filter 13) there is a complete removal of hexavalent chromium from the solution.

### Example 10: obtaining functionalized filters with malonic acid and oxalic acid and hexavalent chromium removal tests from aqueous solutions, outside the scope of the present invention

The experimental procedure described in Example 5 is repeated by soaking four new and non-functionalized portions of the same type of filter in five beakers containing aqueous solutions of the following type, thus respectively obtaining cellulose filters with a characteristic functionalization:
- 1M malonic acid aqueous solution (Filter 16);
- 1M citric acid aqueous solution (Filter 17);
- 1M oxalic acid aqueous solution (Filter 18);
- 1M ascorbic acid aqueous solution (Filter 19).

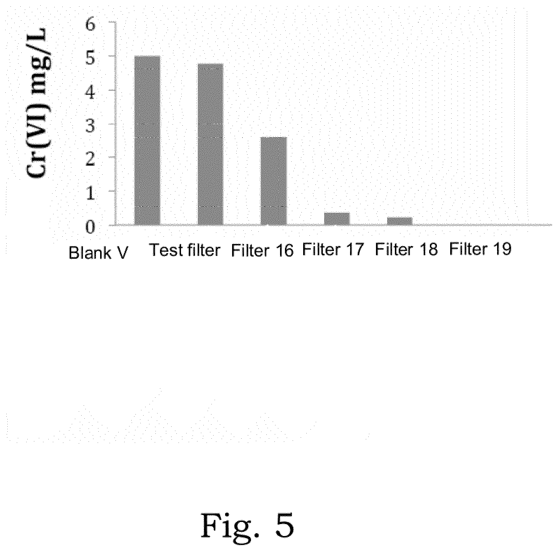

Subsequently, each of the filters thus functionalized (Filters 16-19) was singularly soaked in a beaker containing 50 ml of an aqueous solution with a hexavalent chromium concentration equal to 5 mg/L, previously prepared from bottled low mineral water (bottled water of the "Norda", "Levissima" or "Consilia" brand) (indicated as "White V" in Figure 5).

A further non-functionalized filter (indicated as "Test filter" in Figure V) was soaked in a beaker containing 50 ml of an aqueous solution with the same Cr (VI) concentration.

Each filter was left soaked for a time equal to 1 minute.

Afterwards, the aqueous solution of each beaker was subsequently analyzed through colorimetric test based on the formation of complex between hexavalent chromium and diphenyl carbazide (7196A Environmental Protection Agency method), in order to determine the CSM002BEP hexavalent chromium concentration further to the removal test performed in each beaker.

The results of each test are shown in Figure 5.

As clear, by soaking the test filter in the contaminated solution, no significant decrease in the initial hexavalent chromium concentration was recorded. In fact, after soaking a test filter in the contaminated solution for 1 minute, the resulting solution has a final Cr (VI) concentration a little lower than 5 mg/L.

Conversely, the removal tests performed by soaking filters 16-19 in contaminated water result particularly effective in obtaining functionalized filters able to remove Cr (VI) from aqueous solutions, by soaking pre-existing filters comprising cellulose in aqueous solutions comprising a wide range of organic acids extracted from food wastes, such as malonic acid, citric acid, oxalic acid and ascorbic acid.

In general, the filters obtained through the process according to the present invention proved to be particularly effective in abating the content of hexavalent chromium in aqueous solutions, even at high concentrations of contaminant (5 mg/L) and, therefore, these types of filter are suitable for the uses mentioned above with reference to the summary.

## Claims

1. A process for obtaining a filter comprising a porous material that is functionalized with organic acids, which are obtained from recycled material and/or salts thereof, wherein said process comprises the following steps:
- providing a pre-existing filter comprising a porous material, said porous material being cellulose;
- providing an aqueous solution comprising a mixture of said organic acids and/or salts thereof, said aqueous solution having a total concentration of said organic acids comprised between 0.01 mol/L and 1.5 mol/L;
- soaking said pre-existing filter in said aqueous solution until a filter comprising porous material, that is functionalized with the organic acids of said mixture, is obtained;
- removing said filter comprising said functionalized porous material; and
- drying said filter at room temperature,
wherein in said step of providing an aqueous solution said aqueous solution is an aqueous mixture of citric acid and ascorbic acid.

2. Process according to claim 1, wherein said cellulose being nano-crystalline cellulose.

3. Process according to claim 1, wherein said aqueous mixture has a total concentration of said citric acid and ascorbic acid comprised between 0.025 mol/l and 1 mol/L.

4. Process according to claim 3, wherein said total concentration of said citric acid and ascorbic acid is 0.1 mol/L.

5. Process according to claim 3 or 4, wherein the molar ratio between ascorbic acid and citric acid is comprised between 1:4 and 4:1, preferably it is comprised between 1:3 and 3:1.

6. Process according to anyone of the preceding claims, wherein said soaking step is carried out for a time comprised between 10 minutes and 2 hours, preferably for a time comprised between 15 minutes and 1 hour, more preferably for 45 minutes.

7. Process according to anyone of the preceding claims, wherein said soaking step is carried out at room temperature.

8. Process according to anyone of the preceding claims, wherein said drying step is carried out under vacuum for a time comprised between 1 hour and 20 hours, preferably between 10 hours and 18 hours, more preferably for about 15 hours.

9. Process according to anyone of the preceding claims, wherein said organic acids and/or salts thereof are obtained from waste material, preferably from waste plants which are suitable for human consumption, an expired drug and/or a waste additive used in food or pharmaceutical industries.

## Patentansprüche

1. Verfahren zur Herstellung eines Filters umfassend ein poröses Material, das mit organischen Säuren funktionalisiert ist, welche aus recyceltem Material und/oder Salzen davon hergestellt sind, wobei das Verfahren die folgenden Schritte umfasst:
- Bereitstellen eines bereits existierenden Filters umfassend ein poröses Material, wobei das poröse Material Zellstoff ist;
- Bereitstellen einer wässrigen Lösung umfassend eine Mischung der organischen Säuren und/oder Salzen davon, wobei die wässrige Lösung eine Gesamtkonzentration der umfassten organischen Säuren zwischen 0,01 mol/L und 1,5 mol/L aufweist;
- Einweichen des bereits existierenden Filters in der wässrigen Lösung, bis ein Filter umfassend poröses Material, welches mit den organischen Säuren der Mischung funktionalisiert ist, erhalten ist;
- Entfernen des Filters umfassend das funktionalisierte poröse Material; und
- Trocknen des Filters bei Raumtemperatur,
wobei in dem Schritt des Bereitstellens einer wässrigen Lösung die wässrige Lösung eine wässrige Mischung aus Zitronensäure und Ascorbinsäure ist.

2. Verfahren nach Anspruch 1, wobei der Zellstoff nanokristalliner Zellstoff ist.

3. Verfahren nach Anspruch 1, wobei die wässrige Mischung eine Gesamtkonzentration der umfassten Zitronensäure und Ascorbinsäure zwischen 0,025 mol/L und 1 mol/L aufweist.

4. Verfahren nach Anspruch 3, wobei die Gesamtkonzentration der Zitronensäure und Ascorbinsäure 0,1 mol/L ist.

5. Verfahren nach Anspruch 3 oder 4, wobei das molare Verhältnis zwischen Ascorbinsäure und Zitronensäure zwischen 1:4 und 4:1 liegt, bevorzugt zwischen 1:3 und 3:1 liegt.

6. Verfahren nach einem der vorhergehenden Ansprüche, wobei der Einweichschritt für eine Zeit zwischen 10 Minuten und 2 Stunden durchgeführt wird, bevorzugt für eine Zeit zwischen 15 Minuten und 1 Stunde, bevorzugter für 45 Minuten.

7. Verfahren nach einem der vorhergehenden Ansprüche, wobei der Einweichschritt bei Raumtemperatur durchgeführt wird.

8. Verfahren nach einem der vorhergehenden Ansprüche, wobei der Trocknungsschritt in einem Vakuum für eine Zeit zwischen 1 Stunde und 20 Stunde durchgeführt wird, bevorzugter zwischen 10 Stunden und 18 Stunden, bevorzugter für 15 Stunden.

9. Verfahren nach einem der vorhergehenden Ansprüche, wobei die organischen Säuren und/oder Salze davon aus Abfallmaterial gewonnen wird, bevorzugt aus Abfallpflanzen, welche für den menschlichen Verzehr geeignet sind, einem abgelaufenen Medikament und/oder einem Abfallzusatzstoff, welcher in Lebensmittel- oder Pharmaindustrien verwendet wird.

## Revendications

1. Processus d'obtention d'un filtre comprenant un matériau poreux qui est fonctionnalisé avec des acides organiques, qui sont obtenus à partir d'un matériau recyclé et/ou de sels de celui-ci, dans lequel ledit processus comprend les étapes suivantes :
- la fourniture d'un filtre préexistant comprenant un matériau poreux, ledit matériau poreux étant de la cellulose ;
- la fourniture d'une solution aqueuse comprenant un mélange desdits acides organiques et/ou sels de ceux-ci, ladite solution aqueuse présentant une concentration totale desdits acides organiques comprise entre 0,01 mol/L et 1,5 mol/L ;
- le trempage dudit filtre préexistant dans ladite solution aqueuse jusqu'à ce qu'un filtre comprenant un matériau poreux, qui est fonctionnalisé avec les acides organiques dudit mélange, soit obtenu ;
- le retrait dudit filtre comprenant ledit matériau poreux fonctionnalisé ; et
- le séchage dudit filtre à température ambiante,
dans lequel à ladite étape de fourniture d'une solution aqueuse ladite solution aqueuse est un mélange aqueux d'acide citrique et d'acide ascorbique.

2. Processus selon la revendication 1, dans lequel ladite cellulose est de la cellulose nanocristalline.

3. Processus selon la revendication 1, dans lequel ledit mélange aqueux présente une concentration totale dudit acide citrique et dudit acide ascorbique comprise entre 0,025 mol/L et 1 mol/L.

4. Processus selon la revendication 3, dans lequel ladite concentration totale dudit acide citrique et dudit acide ascorbique est de 0,1 mol/L.

5. Processus selon la revendication 3 ou 4, dans lequel le rapport molaire entre l'acide citrique et l'acide ascorbique est compris entre 1:4 et 4:1, étant de préférence compris entre 1:3 et 3:1.

6. Processus selon l'une quelconque des revendications précédentes, dans lequel ladite étape de trempage est réalisée pendant une période comprise entre 10 minutes et 2 heures, de préférence pendant une période comprise entre 15 minutes et 1 heure, plus préférablement pendant 45 minutes.

7. Processus selon l'une quelconque des revendications précédentes, dans lequel ladite étape de trempage est réalisée à température ambiante.

8. Processus selon l'une quelconque des revendications précédentes, dans lequel ladite étape de séchage est réalisée sous vide pendant une période comprise entre 1 heure et 20 heures, de préférence entre 10 heures et 18 heures, plus préférablement pendant environ 15 heures.

9. Processus selon l'une quelconque des revendications précédentes, dans lequel lesdits acides organiques et/ou sels de ceux-ci sont obtenus à partir de déchets, de préférence à partir de déchets végétaux qui sont appropriés pour la consommation humaine, un médicament périmé et/ou un additif de déchet utilisé dans l'industrie alimentaire et l'industrie pharmaceutique.
